(19) **Europäisches Patentamt**

**European Patent Office**

**Office européen des brevets**

(11) **EP 1 729 533 A1**

(12) **EUROPEAN PATENT APPLICATION**

(43) Date of publication:
06.12.2006 Bulletin 2006/49

(51) Int Cl.:
*H04Q 7/36* (2006.01)　　　*H04B 7/155* (2006.01)

(21) Application number: 06011308.1

(22) Date of filing: 31.05.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.05.2005 KR 20050046312**

(71) Applicant: **Samsung Electronics Co., Ltd.**
**Yeongtong-gu**
**Suwon-si, Gyeonggi-do (KR)**

(72) Inventors:
• **Kim, Hoon**
**Suwon-si**
**Gyeonggi-do (KR)**
• **Lee, Yeon-Woo**
**Suwon-si**
**Gyeonggi-do (KR)**
• **Yun, Sang-Boh**
**Suwon-si**
**Gyeonggi-do (KR)**

(74) Representative: **Grünecker, Kinkeldey, Stockmair & Schwanhäusser**
**Anwaltssozietät**
**Maximilianstrasse 58**
**80538 München (DE)**

(54) **Scheduling method in a radio communication system using relay stations, and system therefor**

(57)　A scheduling method and system is disclosed that divides scheduling between a base station and a mobile station into scheduling between the base station and a relay station and scheduling between the relay station and the mobile station, and performs the divided schedulings. In a radio communication system that transmits a signal of a base station to mobile stations located on a border of a cell by using a relay station, the base station having multiple antennas receives phase information of the respective antennas from the relay station having multiple antennas, compensates for phases of the respective antennas, and transmits data through the phase-compensated antennas. The relay station transmits only channel quality information of the mobile station, which has a high possibility of being selected by the base station among channel quality information of the mobile stations that belong to the relay station, to the base station.

FIG.3

Printed by Jouve, 75001 PARIS (FR)

**Description**

**BACKGROUND OF THE INVENTION**

1. Field of the Invention

The present invention relates to a scheduling method and system using a relay station in a radio communication system, and more particularly, to a scheduling method and system that divides a scheduling process between a base station and a mobile station into scheduling between the base station and a relay station and scheduling between the relay station and the mobile station, and performs the divided schedulings.

2. Description of the Related Art

In order to efficiently secure a Quality of Service (QoS) during a multimedia data transmission in a wireless network, a scheduler should fairly provide services to users and maximize the use of restricted radio network resources as well. Conventionally, scheduling between a base station and a relay station is performed using the relay station. However, the environment between the base station and the relay station is mainly a Line Of Sight (LOS) environment in which a time variation is small and a channel environment is good, and thus gain of the scheduling process is reduced. In addition, only a simple forwarding function has been performed between the relay station and the mobile station using a First In First Out (FIFO) method, but no scheduling function has yet been proposed between the relay station and the mobile station.

A Multiple Input Multiple Output (MIMO) / Multiple Input Single Output (MISO) system may be used to improve a performance between a base station and multiple mobile stations. For this, however, a phase information feedback is required between the base station and the multiple mobile stations, and this may lead to the occurrence of overhead.

**SUMMARY OF THE INVENTION**

Accordingly, the present invention has been designed to solve the above and other problems occurring in the prior art, and an object of the present invention is to provide a scheduling method and system that divides a scheduling process between a base station and a mobile station into scheduling between the base station and a relay station and scheduling between the relay station and the mobile station, and performs the divided schedulings.

Another object of the present invention is to provide a method and system that performs phase adjustment of multiple antennas by applying a MIMO/MISO system between a base station and a relay station.

In order to accomplish the above objects, there is provided a scheduling method using a relay station in a radio communication system that transmits a signal of a base station having multiple antennas to mobile stations located on the border of a cell by using a relay station having multiple antennas, which includes receiving by the base station phase information of the respective antennas from the relay station, compensating for phases of the respective antennas, and transmitting data through the phase-compensated antennas; and the relay station transmitting to the base station only channel quality information of the mobile station, which has a high possibility of being selected by the base station among channel quality information of the mobile stations that belong to the relay station.

The base station may set the mobile station having the high possibility of being selected by the base station with reference to a QoS, a previous channel condition, a service type, the number of all mobile stations that will feed the channel quality information back to the base station, and a scheduling metric.

The relay station may receive from the mobile station only the channel quality information of the mobile station, which has the high possibility of being selected by the base station, and transmit to the base station the received channel quality information to the base station, or may receive the channel quality information from all the mobile stations and transmit to the base station only the channel quality information of the mobile station, which has the high possibility of being selected by the base station.

In another aspect of the present invention, there is provided a scheduling method using a relay station having multiple antennas in a radio communication system that transmits a signal of a base station having multiple antennas to mobile stations located on the border of a cell by using a relay station, which includes receiving by the base station phase information of the respective antennas from the relay station, compensating for phases of the respective antennas, and transmitting data through the phase-compensated antennas; and the relay station measuring a whole channel capacity by reflecting channel states of the mobile stations that belong to the relay station, and transmitting the measured whole channel capacity information to the base station.

**BRIEF DESCRIPTION OF THE DRAWINGS**

The above and other objects, features and advantages of the present invention will be more apparent from the following detailed description taken in conjunction with the accompanying drawings, in which:

FIG. 1 illustrates a radio communication system that performs scheduling by using a relay station according to the present invention;
FIG. 2 is a flow diagram illustrating a process of transmitting/receiving data between a base station and a relay station by applying a closed-loop MIMO system according to the present invention;
FIGs. 3 and 4 are flow diagrams illustrating processes performed among a base station, a relay station, and a mobile station when the base station selects the mobile station that will receive channel quality information according to the present invention;
FIGs. 5 and 6 are flow diagrams illustrating processes performed among a base station, a relay station, and a mobile station when the relay station selects the mobile station that will receive channel quality information according to the present invention;
FIG. 7 is a flow diagram illustrating a process performed among a base station, a relay station, and a mobile station according to the present invention; and
FIGs. 8 and 9 are graphs illustrating the results of simulation according to the present invention.

**DETAILED DESCRIPTION OF THE PREFERRED EMBODIMENTS**

Preferred embodiments of the present invention will be described in detail hereinafter with reference to the accompanying drawings. In the following description of the present invention, the same drawing reference numerals are used for the same elements even in different drawings. Additionally, a detailed description of known functions and configurations incorporated herein will be omitted when it may obscure the subject matter of the present invention.

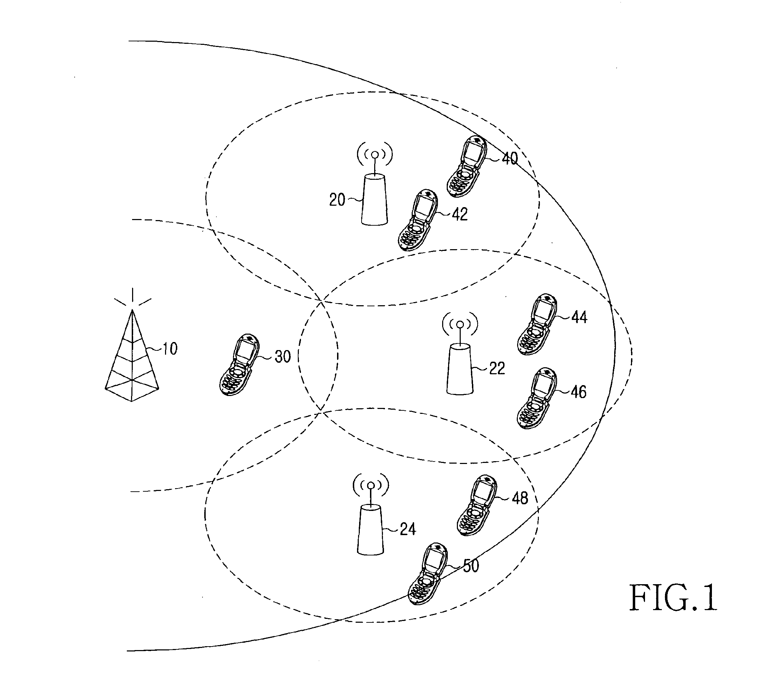

FIG. 1 illustrates a radio communication system that performs scheduling by using a relay station according to the present invention.
A MIMO system is applied between a base station 10 and relay stations 20 through 24, and the base station 10 and the relay stations 20 through 24 are provided with multiple antennas. Although a MISO system may be applied between the base station 10 and the relay stations 20 through 24, it can be easily derived from the MIMO system by those skilled in the art, and thus only the case in which the MIMO system is applied will be described hereinafter.
A mobile station 30 is positioned within a distance in that it can be directly connected to the base station 10. Meanwhile, mobile stations 40 through 50 are positioned on a border of a cell which the signal of the base station reaches, and receive the signal from the base station through the relay stations 20 through 24.
If the relay stations 20 through 24 report phase information of an antenna to the base station 10 by using a closed-loop structure, the base station 10 adjusts the phase of the antenna so as to obtain a power gain.
The power gain of the base station 10 under an LOS channel condition is shown in Equation (1):

$$C = \log\left(1 + \frac{P a^2 n_t n_r}{N_0}\right) \quad \text{bits/s/Hz} \quad \ldots\ldots (1)$$

where $P$ is the whole transmission power, $a$ is a channel gain, $n_t$ is the number of transmitting antennas, $n_r$ is the number of receiving antennas, and $N_0$ is a noise power density. A transmitting terminal is the base station 10, and a receiving terminal is at least one of the relay stations 20 through 24.
The relay stations 20 through 24 perform scheduling, separately from the base station 10, according to the state of channel quality feedback of the mobile stations 40 through 50, and thus overhead is unnecessary.

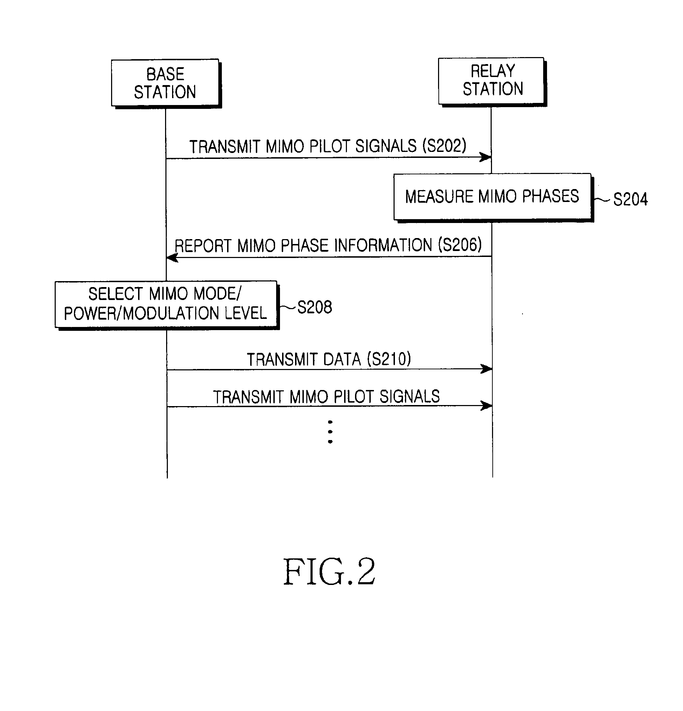

FIG. 2 is a flow diagram illustrating a process of transmitting/receiving data between a base station and a relay station in the system of FIG. 1 by applying a closed-loop MIMO system according to the present invention.
The base station transmits a MIMO pilot signal to the relay station for the respective antennas (step S202). Then, the relay station measures phases for the respective antennas (step S204), and reports information on the results of measurement to the base station (step S206).
The base station selects a MIMO mode such as a spatial multiplexing (SM) mode by using the received phase information, selects a modulation type such as an adaptive modulation and coding (AMC) scheme, selects the power (step S208), and transmits the data to the relay station (step 5210). In this case, data transmission is performed to maximize a transmission efficiency.

The present invention reduces the feedback of Channel Quality Information (CQI) transmitted from the mobile station to the base station using the relay stations.

In order to reduce the feedback of the CQI from the mobile station, a method for selectively receiving the feedback of the CQI of the mobile station has been proposed. The selection of the mobile station that will receive the feedback of the CQI for the selective feedback may be performed by the base station or the relay station.

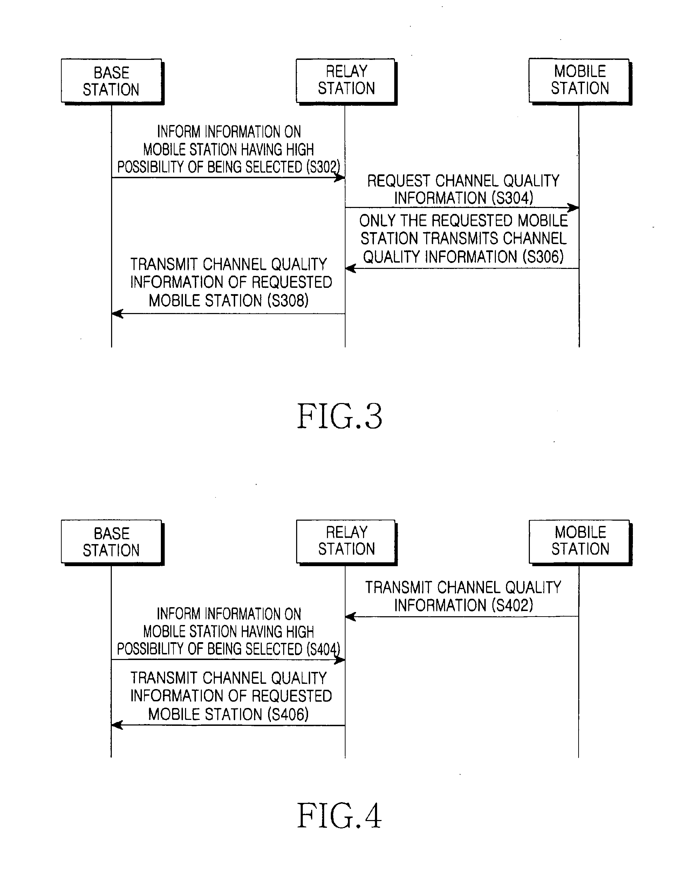

FIG. 3 is a flow diagram view illustrating a process performed among the base station, the relay station, and the mobile station, when the base station selects the mobile station to receive the CQI.

The base station sets the mobile station having a high possibility of being selected by the base station with reference to the current QoS, a previous channel condition, a service type, the number of the whole mobile stations that will feed the CQI back to the base station, and a scheduling metric, and informs the relay station of the set mobile station (step S302).

Thus, the relay station sends a request for the CQI only to the mobile station having the high possibility of being selected by the base station (step S304). The mobile station having the high possibility of being selected then transmits its CQI to the relay station (step S306). Alternatively, the relay station may transmit the information, on the mobile station having a high possibility of being selected, to all the mobile stations when the relay station requests the mobile stations to transmit the CQI, and only the mobile station having the high possibility of being selected may transmit its CQI to the relay station.

The relay station then transmits the CQI received from the mobile station to the base station (step S308).

Although FIG. 3 shows that the relay station receives and transmits only the CQI of the mobile station requested by the base station, there exists another method, as shown in FIG. 4, whereby if the relay station receives the CQI from all the mobile stations (step S402) and receives the information on the mobile station having the high possibility of being selected from the base station (step S404), the relay station transmits only the CQI of the corresponding mobile station to the base station (step S406).

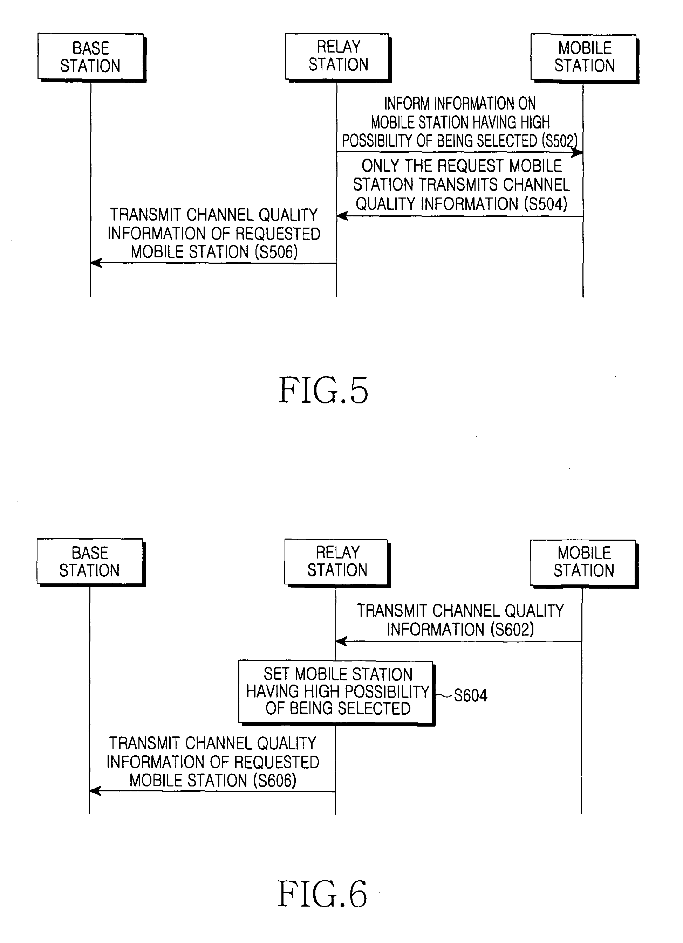

FIG. 5 is a flow diagram of a process performed among the base station, the relay station, and the mobile station when the relay station selects the mobile station that will receive the CQI according to the present invention.

The relay station sets the mobile station having a high possibility of being selected by the base station with reference to the current QoS, a previous channel condition, a service type, the number of the whole mobile stations that will feed the CQI back to the base station, and a scheduling metric, and requests only the mobile station having the high possibility of being selected to transmit the CQI (step S502). The mobile station having the high possibility of being selected transmits its CQI to the relay station (step S504). Alternatively, the relay station may transmit the information on the mobile station having a high possibility of being selected to all the mobile stations when it requests the mobile stations to transmit the CQI, and only the mobile station having the high possibility of being selected may transmit its CQI to the relay station.

The relay station then transmits the CQI received from the mobile station to the base station (step S506). That is, the relay station transmits only the CQI of the mobile station having the high possibility of being selected to the base station.

Although FIG. 5 shows that the relay station sets the mobile station having the high possibility of being selected by the base station and receives only the CQI of the corresponding mobile station, there exists another method, as shown in FIG. 6, whereby the relay station receives the CQI from all the mobile stations (step S602), the base station sets the mobile station having the high possibility of being selected (step S604), and the relay station transmits only the CQI of the corresponding mobile station to the base station (step S606).

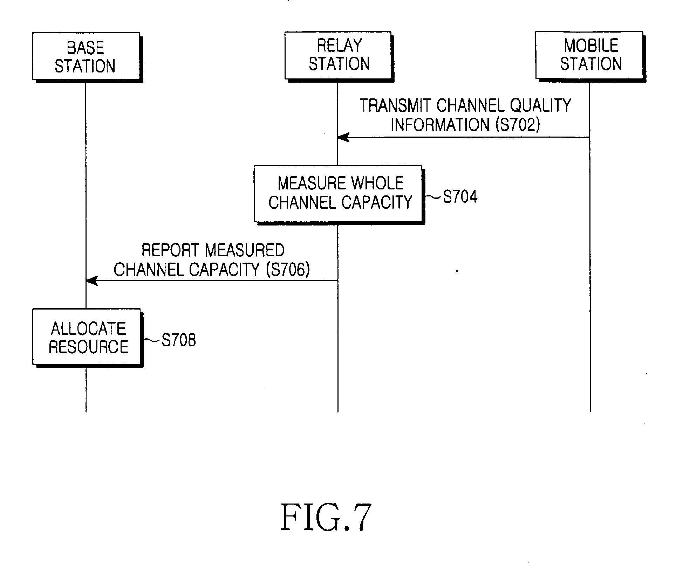

On the other hand, the present invention also provides another method of reducing the feedback of the CQI transmitted from the mobile station to the base station by using the relay station, as shown in FIG. 7.

The relay station collects the CQI from all the mobile stations that belong to the relay station (step S702). The relay station measures the whole channel capacity that reflects channel states of the whole mobile stations (step S704). For example, the relay station measures an average, a dispersion, a minimum value, and a maximum value of the channel capacity.

The relay station reports the information on the measured whole channel capacity to the base station (step S706). The base station then allocates resources to the relay station by using the information on the whole channel capacity (step S708). Further, the information on the whole channel capacity may be used to match a load balance in the base station.

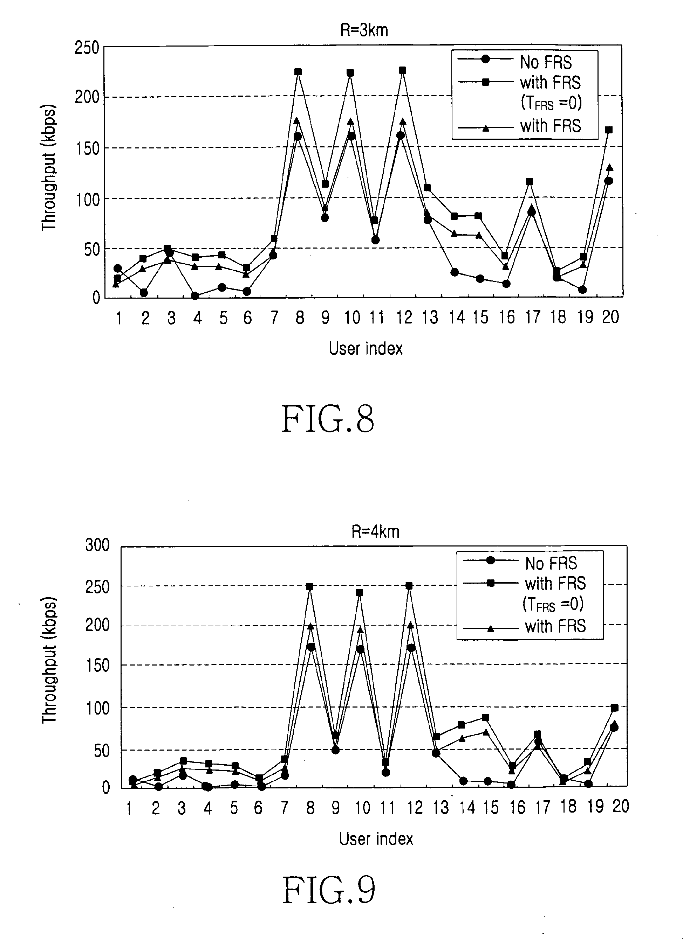

FIGs. 8 and 9 are graphs illustrating the results of simulation according to the present invention by using parameters listed in Table 1 in an environment having the signal to noise ratio (SNR) and the data rate listed as described in Table 2.

Table 1

| Parameter | Value |
|---|---|
| Target System | TDMA |
| Slot Duration | 10 ms |
| User Distribution | Uniform in a 6-Sectorized Region |
| Number of Users | 20 (8:12) |
| Path Loss Model | NLOS: 128+37.6 x log10(R) LOS: 60+20 x log10 (R) |
| Fading Model | One Path Rayleigh |
| CQI Report | No Feedback Error |
| BS/FRS Scheduling Slot Ratio | 2:1 |
| BS/FRS Power Ratio | 4:1 |
| Scheduling Metric | Proportional Fairness (PF) |

Table 2

| SNR (dB) | Data Rate (Kbps) |
|---|---|
| -12.5 | 38.4 |
| -9.5 | 76.8 |
| -8.5 | 102.6 |
| -6.5 | 153.6 |
| -5.7 | 204.8 |
| -4.0 | 307.2 |
| -1.0 | 614.4 |
| 1.3 | 921.6 |
| 3.0 | 1228.8 |
| 7.2 | 1843.2 |
| 9.5 | 2457.6 |

In Table 1, the ratio of 8:12 of the number of users is a ratio of users who are directly connectable to the base station to users who are connectable to the base station via the relay station.

The simulation was performed using a fixed relay station (FRS). In FIGs. 8 and 9, "No FRS" indicates a case where the base station communicates with the user, i.e., the mobile station, without using the fixed relay station, while "with FRS ($T_{FRS}$=0)" assumes a case where a transmitting resource between the base station and the fixed relay station is separately allocated by wire. Also, "with FRS" indicates a case where even the resources required for transmission between the base station and the fixed relay station are used for the performance analysis according to the present invention. "R" indicates a cell radius of a base station.

Referring to FIG. 8, in the case of "with FRS ($T_{FRS}$=0)", the gain of the whole throughput is 57%, and in the case of "with FRS", the gain is 23%, as compared with the case of "No FRS". Referring to FIG. 9, the gain of the whole throughput is 69% in the case of "with FRS ($T_{FRS}$=0)", and the gain is 38% in the case of "with FRS", as compared with the case of "No FRS". As a result, it can be recognized that as the cell radius of the base station becomes larger, the effect of scheduling by using the relay station becomes more prominent.

As described above, by dividing scheduling between the base station and the mobile station into scheduling between the base station and the relay station and scheduling between the relay station and the mobile station, and performing the divided schedulings, the channel capacity and the throughput of users on the border of the cell are increased.

In addition, the feedback of the channel quality information that is performed by the mobile station is decreased.

While the present invention has been shown and described with reference to certain preferred embodiments thereof, it will be understood by those skilled in the art that various changes in form and details may be made therein without departing from the spirit and scope of the present invention as defined by the appended claims.

## Claims

1. A scheduling method using a relay station having multiple antennas in a radio communication system that transmits a signal of a base station having multiple antennas to mobile stations located on a border of a cell by using a relay station, the method comprising the steps of:

   receiving by the base station phase information of the respective antennas from the relay station compensating for phases of the respective antennas, and transmitting data through the multiple antennas; and
   transmitting by the relay station only channel quality information of the mobile station, which has a high possibility of being selected by the base station among channel quality information of the mobile stations that belong to the relay station, to the base station.

2. The scheduling method as claimed in claim 1, further comprising the steps of:

   transmitting by the base station MIMO pilot signals for the respective antennas to the relay station;
   measuring by the relay station the phases for the respective antennas, and transmitting the measured phase information to the base station; and
   compensating by the base station for the phases of the respective antennas with reference to the measured phase information, and transmitting the data to the relay station.

3. The scheduling method as claimed in claim 1, further comprising the steps of:

   setting by the base station the mobile station having a high possibility of being selected by the base station, and reporting information on the set base station to the relay station; and
   requesting by the relay station only the mobile station having the high possibility of being selected by the base station to transmit the channel quality information, and transmitting the received channel quality information to the base station.

4. The scheduling method as claimed in claim 1, further comprising the steps of:

   receiving by the relay station the channel quality information from all the mobile stations that belong to the relay station;
   setting by the base station the mobile station having the high possibility of being selected by the base station, and reporting information on the set base station to the relay station; and
   transmitting by the relay station only the channel quality information of the mobile station, which has the high possibility of being selected by the base station, among the received channel quality information of all the mobile stations to the base station.

5. The scheduling method as claimed in claim 3, wherein the base station sets the mobile station having the high possibility of being selected by the base station with reference to a current QoS, a previous channel condition, a service type, the number of mobile stations that will feed the channel quality information back to the base station, and a scheduling metric.

6. The scheduling method as claimed in Claim 4, wherein the base station sets the mobile station having the high possibility of being selected by the base station with reference to a current QoS, a previous channel condition, a service type, the number of mobile stations that will feed the channel quality information back to the base station, and a scheduling metric.

7. The scheduling method as claimed in claim 1, further comprising the steps of:

   setting by the relay station the mobile station having the high possibility of being selected by the base station, and requesting only the mobile station having the high possibility of being selected by the base station to transmit the channel quality information; and

receiving by the relay station the channel quality information from the mobile station having the high possibility of being selected by the base station, and transmitting the received channel quality information to the base station.

8. The scheduling method as claimed in claim 1, further comprising the steps of:

receiving by the relay station the channel quality information from all the mobile stations that belong to the relay station;

setting by the relay station the mobile station having the high possibility of being selected by the base station; and transmitting by the relay station only the channel quality information of the mobile station, which has the high possibility of being selected by the base station, among the received channel quality information of all the mobile stations to the base station.

9. The scheduling method as claimed in claim 7, wherein the relay station sets the mobile station having the high possibility of being selected by the base station with reference to a current QoS, a previous channel condition, a service type, the number of mobile stations that will feed the channel quality information back to the base station, and a scheduling metric.

10. The scheduling method as claimed in claim 8, wherein the relay station sets the mobile station having the high possibility of being selected by the base station with reference to a current QoS, a previous channel condition, a service type, the number of mobile stations that will feed the channel quality information back to the base station, and a scheduling metric.

11. A scheduling method using a relay station having multiple antennas in a radio communication system that transmits a signal of a base station having multiple antennas to mobile stations located on a border of a cell by using a relay station, the method comprising the steps of:

receiving by the base station phase information of the respective antennas from the relay station compensating for phases of the respective antennas, and transmitting data through the antennas; and measuring by the relay station a whole channel capacity by reflecting channel states of the mobile stations that belong to the relay station, and transmitting the measured whole channel capacity information to the base station.

12. The scheduling method as claimed in claim 11, further comprising the steps of:

transmitting by the base station MIMO pilot signals for the respective antennas to the relay station; measuring by the relay station the phases for the respective antennas, and transmitting the measured phase information to the base station; and compensating by the base station for the phases of the respective antennas with reference to the measured phase information, and transmitting the data to the relay station.

13. The scheduling method as claimed in claim 11, further comprising the steps of:

receiving by the relay station the channel quality information from all the mobile stations that belong to the relay station;

measuring by the relay station the whole channel capacity using the channel quality information of all the mobile stations, and transmitting information on the measured whole channel capacity to the base station; and allocating by the base station a resource to the relay station with reference to the information on the whole channel capacity.

14. The scheduling method as claimed in claim 11, wherein the information on the whole channel capacity includes an average, a dispersion, a minimum value, and a maximum value of the channel capacity.

15. A radio communication system for transmitting a signal of a base station having multiple antennas to mobile stations on a border of a cell by using a relay station having multiple antennas, the radio communication system comprising:

measuring and transmitting by the relay station

phase information of respective antennas to the base station, and transmitting only channel quality information of the mobile station, which has a high possibility of being selected by the base station, among channel quality information of the mobile stations that belong to the relay station to the relay station, and

receiving by the base station the measured phase information from the relay station, compensating for phases of the respective antennas, and transmitting data through the antennas.

The radio communication system as claimed in claim 15, wherein the base station transmits MIMO pilot signals for the respective antennas to the relay station, and the relay station measures the phase information and transmits the measured phase information.

16. The radio communication system as claimed in claim 15, wherein the base station sets the mobile station having the high possibility of being selected by the base station with reference to a current QoS, a previous channel condition, a service type, the number of mobile stations that will feed the channel quality information back to the base station, and a scheduling metric; and informs the relay station of the set information of the mobile station.

17. The radio communication system as claimed in claim 17, wherein the relay station requests only the mobile station having the high possibility of being selected by the base station to transmit the channel quality information, and transmits the received channel quality information to the base station.

18. The radio communication system as claimed in claim 17, wherein the relay station receives the channel quality information from all the mobile stations that belong to the relay station, and transmits only the channel quality information of the mobile station, which has the high possibility of being selected by the base station, among the received channel quality information of all the mobile stations to the base station.

19. The radio communication system as claimed in claim 15, wherein the relay station sets the mobile station having the high possibility of being selected by the base station with reference to a current QoS, a previous channel condition, a service type, the number of mobile stations that will feed the channel quality information back to the base station, and a scheduling metric.

20. The radio communication system as claimed in claim 20, wherein the relay station requests only the mobile station having the high possibility of being selected by the base station to transmit the channel quality information.

21. The radio communication system as claimed in claim 20, wherein the relay station receives the channel quality information from all the mobile stations that belong to the relay station, and transmits only the channel quality information of the mobile station, which has the high possibility of being selected by the base station, among the received channel quality information of all the mobile stations to the base station.

22. A radio communication system for transmitting a signal of a base station having multiple antennas to mobile stations on a border of a cell by using a relay station having multiple antennas, the radio communication system comprising:

measuring and transmitting by the relay station phase information of respective antennas to the base station, measuring a whole channel capacity by reflecting channel states of the mobile stations that belong to the relay station, and transmitting the measured whole channel capacity information to the base station; and
receiving by the base station the measured phase information from the relay station, compensating for phases of the respective antennas, transmitting data through the antennas, and allocating a resource to the relay station with reference to the whole channel capacity information.

23. The radio communication system as claimed in claim 23, wherein the base station transmits MIMO pilot signals for the respective antennas to the relay station, and the relay station measures and transmits the phase information.

24. The radio communication system as claimed in claim 23, wherein the relay station receives the channel quality information from all the mobile stations that belong to the relay station, measures the whole channel capacity by using the channel quality information of all the mobile stations, and transmits the measured whole channel capacity information to the base station.

25. The radio communication system as claimed in claim 23, wherein the whole channel capacity information includes an average, a dispersion, a minimum value, and a maximum value of the channel capacity.

FIG.1

FIG.2

```
┌──────────┐        ┌──────────┐        ┌──────────┐
│  BASE    │        │  RELAY   │        │ MOBILE   │
│ STATION  │        │ STATION  │        │ STATION  │
└──────────┘        └──────────┘        └──────────┘
```

        INFORM INFORMATION ON
       MOBILE STATION HAVING HIGH
    POSSIBILITY OF BEING SELECTED (S302)
                                    REQUEST CHANNEL QUALITY
                                        INFORMATION (S304)
                                    ONLY THE REQUESTED MOBILE
                                    STATION TRANSMITS CHANNEL
                                    QUALITY INFORMATION (S306)
         TRANSMIT CHANNEL QUALITY
         INFORMATION OF REQUESTED
           MOBILE STATION (S308)

## FIG.3

```
┌──────────┐        ┌──────────┐        ┌──────────┐
│  BASE    │        │  RELAY   │        │ MOBILE   │
│ STATION  │        │ STATION  │        │ STATION  │
└──────────┘        └──────────┘        └──────────┘
```

                                    TRANSMIT CHANNEL QUALITY
                                        INFORMATION (S402)
          INFORM INFORMATION ON
        MOBILE STATION HAVING HIGH
     POSSIBILITY OF BEING SELECTED (S404)

         TRANSMIT CHANNEL QUALITY
         INFORMATION OF REQUESTED
           MOBILE STATION (S406)

## FIG.4

| BASE STATION | RELAY STATION | MOBILE STATION |
|---|---|---|

INFORM INFORMATION ON MOBILE STATION HAVING HIGH POSSIBILITY OF BEING SELECTED (S502)

ONLY THE REQUEST MOBILE STATION TRANSMITS CHANNEL QUALITY INFORMATION (S504)

TRANSMIT CHANNEL QUALITY INFORMATION OF REQUESTED MOBILE STATION (S506)

FIG.5

| BASE STATION | RELAY STATION | MOBILE STATION |
|---|---|---|

TRANSMIT CHANNEL QUALITY INFORMATION (S602)

SET MOBILE STATION HAVING HIGH POSSIBILITY OF BEING SELECTED ~S604

TRANSMIT CHANNEL QUALITY INFORMATION OF REQUESTED MOBILE STATION (S606)

FIG.6

FIG.7

FIG.8

FIG.9

EP 1 729 533 A1

**European Patent Office**

**EUROPEAN SEARCH REPORT**

Application Number

EP 06 01 1308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2004/107693 A (TELEFONAKTIEBOLAGET LM ERICSSON ; LARSSON, PETER) 9 December 2004 (2004-12-09) * the whole document * | | INV. H04Q7/36 H04B7/155 |
| A | US 2003/124976 A1 (TAMAKI TSUYOSHI ET AL) 3 July 2003 (2003-07-03) * the whole document * | | |
| A | RANKOV B ET AL: "On the capacity of relay-assisted wireless MIMO channels" SIGNAL PROCESSING ADVANCES IN WIRELESS COMMUNICATIONS, 2004 IEEE 5TH WORKSHOP ON LISBON, PORTUGAL 11-14 JULY 2004, PISCATAWAY, NJ, USA,IEEE, 11 July 2004 (2004-07-11), pages 323-327, XP010806099 ISBN: 0-7803-8337-0 * the whole document * | | |
| A | US 2003/153316 A1 (NOLL JOHN R ET AL) 14 August 2003 (2003-08-14) * the whole document * | | TECHNICAL FIELDS SEARCHED (IPC) H04Q H04B |

The present search report has been drawn up for all claims

| Place of search | Date of completion of the search | Examiner |
|---|---|---|
| Berlin | 4 August 2006 | Kampouris, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**EP 1 729 533 A1**

## ANNEX TO THE EUROPEAN SEARCH REPORT
## ON EUROPEAN PATENT APPLICATION NO.

EP 06 01 1308

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2006

| Patent document cited in search report | | Publication date | Patent family member(s) | | Publication date |
|---|---|---|---|---|---|
| WO 2004107693 | A | 09-12-2004 | AU | 2004244562 A1 | 09-12-2004 |
| | | | BR | PI0410629 A | 20-06-2006 |
| | | | CA | 2522588 A1 | 09-12-2004 |
| | | | EP | 1627510 A1 | 22-02-2006 |
| | | | EP | 1627511 A1 | 22-02-2006 |
| | | | MX | PA05012228 A | 10-02-2006 |
| | | | WO | 2004107694 A1 | 09-12-2004 |
| US 2003124976 | A1 | 03-07-2003 | CN | 1428943 A | 09-07-2003 |
| | | | JP | 2003198442 A | 11-07-2003 |
| US 2003153316 | A1 | 14-08-2003 | NONE | | |

EPO FORM P0459

For more details about this annex : see Official Journal of the European Patent Office, No. 12/82